# EUROPEAN PATENT APPLICATION

(11) **EP 0 827 891 A1**
(43) Date of publication of application: **11.03.1998**
(21) Application number: 97104655.2
(22) Date of filing: 19.03.1997
(51) Int. Cl.: B62D 1/04

(54) **A steering wheel for miniaturized vehicles, in particular for sports and recreative use**

(30) Priority: 06.09.1996 IT MI961838
(71) Applicant: BIREL S.p.A., I-20035 Lissone (Milano) (IT)
(72) Inventor: Sala, Oscar, 20035 Lissone (Milano) (IT)
(74) Representative: Sutto, Luca

(57) **Abstract**

It is disclosed a steering wheel for miniaturized vehicles, in particular for sports and recreative use, comprising an outer rim (2), a plurality of spokes (3) having a tubular conformation, and a connecting member (5) joining the end portions (3a) of the spokes (3), which are intended to form a junction body (6, 7) for connection with a column (4a) defining the rotation axis (4) of the steering wheel (1).

## Description

The present invention relates to a steering wheel for miniaturized vehicles, in particular for sports and recreative use, of the type comprising: an outer rim and a plurality of spokes having inner end portions converging at a rotation axis.

It is known that a steering wheel for motor-vehicles of reduced sizes, above all employed in competitions on racing tracks and commonly known as "go-carts" usually consists of an outer rim of tubular conformation and a plurality of spokes having inner end portions converging at a rotation axis defined by a column, that is a shaft through which the steering wheel drives the steering mechanism.

In the known art the outer tubular rim and spokes are usually made of a metal material and more particularly an aluminium alloy, for the purpose of lowering weight.

Specifically, spokes are generally obtained by shearing of a single plate-like element which in the middle defines a flat connecting area between the inner end portions of said spokes. The end of a column is joined to this central flat area by interposition of an appropriate disc-like hub fastened to both the column and the central flat area.

Steering wheels of known type briefly described above have some limits and drawbacks.

First of all they are rather expensive due both to the quality of the raw materials used and to the processes required for making them. Actually, for the outer rim a tube made of an aluminium alloy needs to be manufactured, the further steps of shaping said tube in the form of a ring and welding the ends of same together being required. On the other hand, spokes need a shearing operation involving production of scraps and subsequently a welding operation for joining them to the outer rim.

In addition, the overall weight of a steering wheel of the known type, although reduced by the use of aluminium alloys, is not negligible also due to the fact that thickness of the plate-like element and the central flat area out of which spokes are made necessarily cannot be very thin in order not to adversely affect the structural solidity of the steering wheel.

Finally, steering wheels of known type made of an aluminium alloy have deficiencies from the point of view of pilot's safety because, in case of impacts, sharp corners or cutting edges may be created.

Under this situation, the technical task underlying the present invention is to devise a steering wheel for miniaturized motor-vehicles, in particular for sports and recreative use, capable of substantially eliminating the above mentioned drawbacks.

Within the scope of this technical task it is an important aim of the invention to devise a steering wheel of very reduced production cost, very light weight and appropriate mechanical strength, which wheel in case of impact does not constitute a danger for a pilot's safety.

The technical task mentioned and the aim specified are substantially achieved by a steering wheel for miniaturized motor-vehicles characterized in that each of said spokes has a tubular conformation and in that it comprises means for connecting said inner end portions of the spokes, said connecting means being adapted to form a junction body between the steering wheel and a column defining said rotation axis.

Description of a preferred but non-exclusive embodiment of a steering wheel for miniaturized motor-vehicles in accordance with the present invention is now given hereinafter, by way of non-limiting example, with the aid of the accompanying drawings, in which:

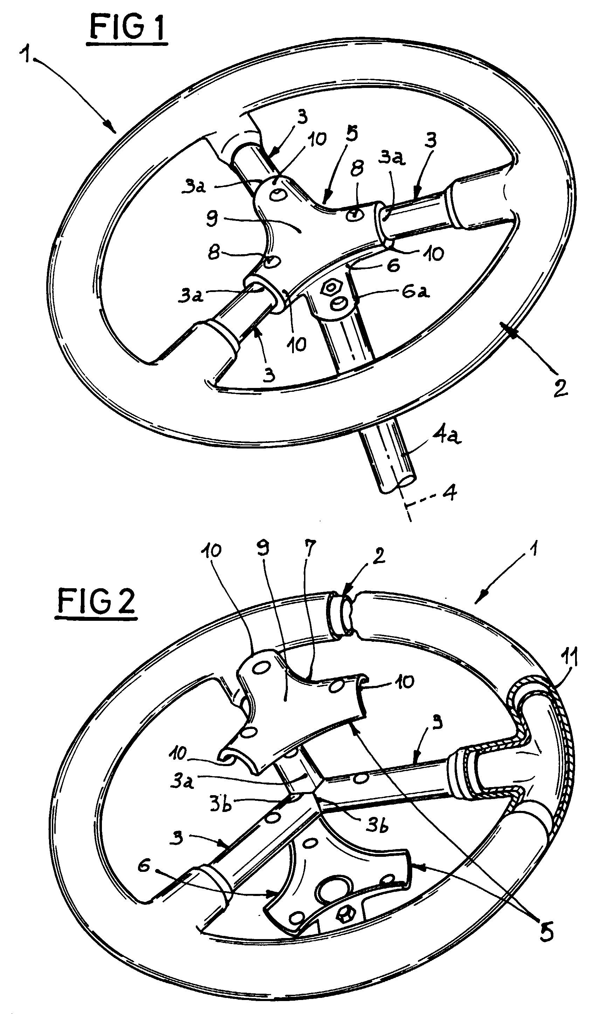

- Fig. 1 is a perspective view of the steering wheel in accordance with the invention; and
- Fig. 2 is an exploded view partly in section of the steering wheel illustrated in Fig. 1.

With reference to the drawings, the steering wheel in accordance with the invention is generally identified by reference numeral 1.

It comprises an outer rim 2 and a plurality of spokes 3, three spokes for example, having inner end portions 3a converging at a rotation axis of the steering wheel 4 defined by a column 4a of known type.

In an original manner, not only the outer rim 2 is of tubular conformation, but spokes 3 of tubular form are likewise provided.

More specifically, the rim 2 and spokes 3 form a unitary body made of plastic material, preferably obtained by a blow-moulding process. This blow-moulding process consists in closing two superposed layers of plastic material between two mould halves defining a cavity corresponding to the steering wheel shape and admitting air or other fluid under pressure between said layers, so as to cause stretching and adhesion of the layers to the forming cavity of said mould halves.

Advantageously, the inner end portions 3a of spokes 3 have ends 3b concentric with the rotation axis and made mutually integral during the same blow-moulding step.

In addition, the end portions 3a are further mutually engaged by connecting means 5 adapted to form a junction body between the steering wheel 1 and column 4a defining the rotation axis 4. To this end the connecting means 5 advantageously comprises a pair of half shells 6 and 7 of metal material, an aluminium alloy for example. More particularly, an attachment half shell 6 is provided, which is turned towards column 4a and is provided with a hub-shaped extension 6a adapted to form a coupling seating for a corresponding end of column 4a. Said attachment half shell 6a coaxially engages, by appropriate fixing means consisting of through screws 8 for example, a fastening half shell 7 substantially having the same conformation, in mirror image relationship, as the attachment half shell 6, but being devoid of the corresponding hub-shaped extension.

When the half shells 6, 7 are joined together they define, in the junction body formed by them, an internally hollow central portion 9 from which radial extensions 10 project, each of which lends itself to vice-like close the end portion 3a of a corresponding spoke 3, firmly engaging it at a predetermined distance from the rotation axis 4.

The internally hollow central portion 9 is in turn adapted to house in a free way, i.e. with a certain play, the ends 3a of spokes 3 facing the rotation axis 4a of the steering wheel 1.

In known manner, the steering wheel 1 can be provided with a coating 11 made of leather or other appropriate material, at the rim or optionally at the spoke 3 ends opposite to the connecting means 5.

The invention achieves important advantages.

First of all the steering wheel made of plastic material in accordance with the invention has very reduced production costs due both to the very low cost of the raw material used and the quick and easy manufacturing process resulting from the use of such a material. Actually, it is pointed out that blow-moulding takes place in a single and quick operating step and, unlike the known art, complicated welding operations for connection between the spokes and the rim are not required.

In any case it should be recognized that, due to the possibility of use of plastic material resulting from the tubular conformation of spokes, the steering wheel in question is advantageous over the prior art even if moulding processes other than blow-moulding are employed.

The tubular conformation of spokes also enables convenient strength features to be maintained even when plastic material of low cost is used. In addition, the overall solidity of the steering wheel resulting from the vice-like closure of the inner end portions of the spokes by the connecting means embodied as half shells, which can be advantageously adopted independently of the spoke structure and conformation, is further increased by mutual joining of these end portions obtained during the moulding step.

In particular, it should be noted that the presence of the radial extensions 10 enables the spokes 3 to be firmly anchored, as above described, at areas suitably spaced apart from the rotation axis 4, so as to conveniently reduce bending and shearing stresses transmitted to said spokes by effect of axial and rotational efforts imposed through the steering wheel rim. Due to play created between the spoke ends 3b and the inner walls of the central portion 9, it is eliminated the risk that between the spokes 3 and the junction body 5 undesired reaction points too close to the rotation axis 4 may be formed, capable of triggering too big reaction stresses on the spokes themselves.

It will be recognized that by adopting tubular spokes in accordance with the invention, it will be also possible to manufacture steering wheels made of a metal alloy in an economically advantageous manner.

Actually, tubular spokes can be directly obtained by cutting lengths of the desired size from a continuous bar, thereby eliminating the high production of scraps involved in known production processes.

In addition, the spoke length can be easily set depending on the different sizes of the steering wheels being produced, without being obliged to arrange a plurality of moulds and equipments to be each exclusively employed for producing wheels of a given size.

The use of plastic material for spokes and rim enables the steering wheel weight to be reduced to the maximum extent thereby helping in lowering the overall weight of the vehicle on which said wheel is mounted. This feature is particularly appreciated, as well known, above all when sports competition vehicles are concerned.

Finally, in case of serious impacts, the plastics structure of the steering wheel in accordance with the invention will have a tendency to deform but not to break, thereby avoiding creation of sharp edges or corners that could dangerously injure the pilot's body.

## Claims

1. A steering wheel for miniaturized vehicles, in particular for sports and recreative use, of the type comprising: an outer rim (2) and a plurality of spokes (3) having inner end portions (3a) substantially converging at a rotation axis (4), characterized in that each of said spokes (3) has a tubular conformation and in that it comprises connecting means (5) for joining said inner end portions (3a) of the spokes (3), said connecting means (5) being adapted to form a junction body between the steering wheel (1) and a column (4a) defining said rotation axis (4).

2. A steering wheel according to claim 1, characterized in that said spokes (3) and rim (2) are made of plastic material.

3. A steering wheel according to claim 2, characterized in that said spokes (3) and rim (2) are of one piece construction.

4. A steering wheel according to claim 3, characterized in that said one piece defining the spokes (3) and rim (2) is manufactured by a process involving a blow-moulding step.

5. A steering wheel according to claim 3, characterized in that said inner end portions (3a) of the spokes (3) have ends (3b) concentric with the steering wheel (1) which are made mutually integral.

6. A steering wheel in particular according to claim 1, characterized in that said connecting means (5) comprises at least one pair of half shells (6, 7) adapted to vice-like close said inner end portions (3a) of the spokes (3) and fixing elements (8) between said half shells (6, 7).

7. A steering wheel according to claim 6, characterized in that said pair of half shells (6, 7) comprises one attachment half shell (6) for connection to said column (4a), and one fastening half shell (7) to be coaxially associated with the attachment half shell (6), said attachment half shell (6) having a hub-shaped extension (6a) adapted to engage one end of the column (4a).

8. A steering wheel according to claim 1, characterized in that said junction body is provided with radial extensions (10) each arranged to firmly engage one of said spokes (3) at a predetermined distance from the wheel rotation axis (4).

9. A steering wheel according to claim 8, characterized in that said junction body further has an internally hollow central portion (9) freely housing the spoke ends (3b) facing the rotation axis (4) of the steering wheel (1).
